# EUROPEAN PATENT APPLICATION

(11) **EP 4 796 211 A1**
(43) Date of publication of application: **26.08.2026**
(21) Application number: 25382154.0
(22) Date of filing: 20.02.2025
(51) Int. Cl.: B01J 3/04, B01J 19/24, C08F 2/01

(54) **PLANT AND PROCESS FOR PRODUCING ETHYLENE POLYMERS AT HIGH PRESSURE IN AN AUTOCLAVE, TUBULAR OR AUTO-TUBE REACTOR CONFIGURATION USING SUPER COOLERS**

(71) Applicant: INTERNATIONAL TECHNICAL EXCELLENCE CENTERS, INC., Baton Rouge, LA 70816 (US)
(72) Inventor: FLORES, Joaquin, 28007 MADRID (ES); RADFORD, Dennis, SAINT AMANT, LA 70774 (US)
(74) Representative: ZBM Patents - Zea, Barlocci & Markvardsen

(57) **Abstract**

A plant for producing an ethylene polymer, the plant comprising a secondary compressor with an outlet; a temperature adjusting system with an inlet and an outlet, the temperature adjusting system being in fluid communication with the secondary compressor outlet; a reaction system with an inlet in fluid communication with the outlet of the temperature adjusting system, the reaction system comprising a tubular reactor, wherein the tubular reactor has two or more reaction zones, wherein each reaction zone comprises i) a reaction section having an inside diameter and ii) a super cooler downstream and in direct fluid communication with the reaction section; and a controller configured to allow that a fluid has a residence time in the reaction section of no more than 60 seconds; wherein the super cooler comprises two or more parallel flow tubes having an inside diameter smaller than the inside diameter of the reaction section. And a process for producing an ethylene (co)polymer by polymerizing ethylene or, alternatively, ethylene and a comonomer, in a plant as defined above.

## Description

### Technical Field

This present disclosure relates to the field of polymer chemistry. In particular, it relates to a process for the manufacturing of ethylene homopolymers and copolymers at high pressure using a specific system configuration operating with an autoclave, a tubular or an auto-tube configuration and super coolers. This specific configuration enhances heat transfer, reduces pressure drop and electricity consumption, allows productivity and process safety improvements, and reduces the reactor bay volume requirements for safe operation under high pressure conditions compared to conventional design.

### Background Art

High-pressure reactor polymerization plants convert relatively low-cost ethylene, optionally in combination with one or more comonomers, such as vinyl acetate, acrylates, dienes and even acid comonomers, into valuable polyolefins products. The polymerization takes place at relatively medium to high temperatures and high pressures, typically from 120 MPa to 350 MPa or higher, and is highly exothermic. The resulting polymer is a variety of highly value polymers used in multiple applications like film, extrusion coating, wire and cable, hot melt, and solar film applications among others.

It is generally known to control the comonomer content and the polymer molecular weight by adding a co-monomer and a modifier in the suction of the secondary compressor and feeding the resultant components to the reactor. However, adding a comonomer and a modifier in the suction of the secondary compressor increases fouling, reduces reliability, and increases the risk of process safety incidents, as described at WO 2021250054. This negative impact increases when a) comonomer reactivity increases, and/or b) comonomer concentration increases.

It is generally known as well the use of autoclave reactor configurations, either single or combination of several autoclave reactors, to produce ethylene homopolymer and ethylene copolymers. Other configurations include the use of tubular reactors and the use of a configuration of autoclave and tubular reactor. In general, autoclave reactor configurations have benefits over tubular only configuration when producing homopolymer for extrusion coating applications, or when high comonomer content incorporations are required or comonomer exhibits a very high reactivity versus ethylene. However, certain tubular reactor configurations, either alone or when used as a tail of an autoclave reactor, can get polymers of similar comonomer content and other polymer characteristics.

The negative impact of adding a co-monomer in the suction of the secondary compressor to the autoclave reactor motor reliability and top bearing supported by the rotating agitator was also described at WO2021250054. When using a tubular reactor configuration, an added negative impact is the increased fouling to the preheating section of a tubular reactor also described at WO2024089081.

In all cases, the amount of polymer produced is directly related to the overall heat balance in the reaction section. It is generally known that, when using autoclave only configurations, lower reactor feed temperatures allow to increase the ethylene and (if applicable) comonomer conversion. When using autoclaves, either single or in combination with other autoclave or with a tube, reactor feed coolers (RFCs) are typically used to cool ethylene and comonomer feeds to temperatures that can go as low as -20 °C. RFCs typically consist of long double pipe heat exchangers, where feed mix stream passes through the process side at high pressure, typically above 120 MPa, and coolant passes through the pipe jacket side. Depending on the autoclave reactor design, it can use one RFC or multiple RFCs. Pressure drops across those coolers depend on the velocity, the inside diameter and length of the pipe.

It is generally also known that when using a tubular reactor configuration, the reactor consists of preheating, reaction and cooling sections. A reactor can be designed to preheat all the gas or split the flow with one front entry feed and one or multiple side-stream feeds. Side-stream feeds can be typically cooled in a similar fashion as described for the autoclave reactor feed coolers. By contrast, preheating is required to increase gas temperature from the secondary compressor discharge temperature to the first reaction initiation temperature. In general, tubular reactors consist of a long double pipe heat exchanger, from 500 to 5,000 meters or higher, where the ethylene mixture and polymer produced stream passes through the process side at high pressure, typically above 180 MPa and as high as 350 MPa. Longer tubes are required to remove heat generated when capacity increases but offer other disadvantages. Typically, hot water is used as a coolant, which passes through the pipe jacket side. It is generally also known that the ethylene / polymer mixture stream is subject to reactor tube fouling. When under stable operations, there are several variables that are very relevant and can affect fouling like viscosity of the mixture, velocity, and tube jacket conditions, but there are others that affect as well. Also, other non-stable operations like reaction start up or shut down may have an impact to fouling as well.

There is, therefore, a need for an enhanced cooling configuration in high pressure tubular systems used at high pressure ethylene (co)polymerization reactors that, when used with an autoclave configuration, a tubular reactor or an autoclave-tubular reactor configuration, provide improvements in process safety, while providing higher productivity and lower electricity consumption, and that may reduce the capital cost invested in the building a new plant.

### Summary of Invention

Inventors have developed a new configuration of cooling zones for the (co)polymerization of ethylene or ethylene/comonomer and specific reaction conditions that, when operating at high temperatures (e.g., equal to or higher than 110 °C such as from 130 °C to 380 °C) and high pressure (e.g., equal to or higher than 120 MPa such as from 150 MPa to 360 MPa), results in the production of a broad range of products while also providing substantial benefits versus the process for de (co)polymerization of ethylene or ethylene/comonomer known in the art.

Particularly, the inventors have found an engineering solution using coolers having a particular design, so-called "super coolers", that when used to carry out an ethylene (co)polymerization reaction in an autoclave configuration, a tubular reactor, or a combination of autoclave and tubular reactor, by introducing all the compressed ethylene monomer, optionally with a comonomer and/or modifier, at a pressure equal to or higher than 120 MPa such as from 150 MPa to 350 MPa, some or all of the advantages listed herein below are observed:
- enhanced heat transfer;
- lower pressure drops and lower electricity consumption;
- optionally, higher capacity for a similar set of pressure and temperatures;
- lower high-pressure steel weight required for equivalent heat transfer area;
- improved productivity;
- reduced inventory of ethylene and other flammables within the reactor bay, allowing a smaller reactor bay for equivalent congestion, and reducing capital cost of the bay and others associated with the reduced footprint of the plant.

Besides, an additional advantage for the engineering solution of the present disclosure is that the higher the plant capacity, the greater the benefit.

Thus, an aspect of the present disclosure relates to plant 1 for producing an ethylene polymer, the plant comprising the following components:
- a secondary compressor 5 with an outlet;
- a temperature adjusting system 18 with an inlet and an outlet, the temperature adjusting system being in fluid communication with the secondary compressor outlet;
- a reaction system 6 with an inlet in fluid communication with the outlet of the temperature adjusting system, the reaction system comprising a tubular reactor, wherein the tubular reactor has two or more reaction zones 19, wherein each reaction zone comprises i) a reaction section 20 having an inside diameter and ii) a super cooler 21 downstream and in direct fluid communication with the reaction section; and
- a controller configured to allow that a fluid has a residence time in the reaction section of no more than 60 seconds;
wherein the super cooler comprises two or more parallel flow tubes (i.e., two or more tubes arranged in parallel; such as from 3 to 100, or from 5 to 50, or from 2 to 6, parallel flow tubes) having an inside diameter smaller than the inside diameter of the reaction section.

Potential benefits from the use of super coolers in the process of the present invention and in the conditions disclosed herein are dependent on what the reactor configuration is. In Table 1 some reactor configurations and the potential advantages are listed.

**Table 1**

| Reactor Configuration | Potential Benefits |
|---|---|
| Autoclave only | RFCs lower pressure drop |
| | Reactors post cooler lower pressure drop (when before LD valve) |
| | Reduced high-pressure steel weight required |
| Autoclave - Intercooler - Autoclave | Same as above |
| | Intercooler lower pressure drop |
| Autoclave - Tube combination (embodiment of the invention) | Same as above |
| | Tubular reactor lower pressure drops |
| | Lower electricity consumption |
| | Optionally, higher capacity |
| | Reduced inventory at reactor bay - less congestion |
| | Potential reactor bay reduction and capital cost. |
| Tubular reactor (embodiment of the invention) | Same as above |

Another aspect, the present disclosure relates to a process for producing an ethylene (co)polymer by polymerizing ethylene or, alternatively, ethylene and a comonomer, in a plant as defined herein.

The proposed engineering solution is more beneficial when high-capacity lines are used, such for larger homopolymer and copolymer production, such as 400, 500, 600 kilotons per annum (KTA) capacity or more. It can be used to increase the heat transfer area of the cooling zone in combination with a higher heat transfer area per Ton of compressed mixture.

### Brief Description of Drawings

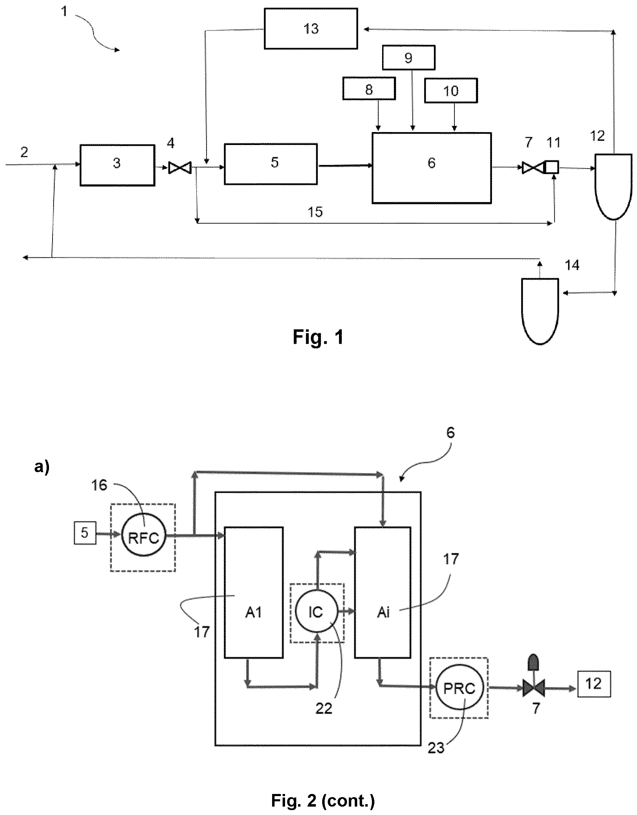

Fig. 1 shows schematically an ethylene polymerization plant where reactor system 6 is any of the reactor configurations listed in Table 1, wherein: 3 is a booster/primary compressor; 5 is a secondary compressor; 6 any of the reactor possible configurations; 7 is the reactor pressure control valve (let down valve); 8, 9 and 10 comonomer, modifier and organic peroxides (radical initiators) feeds; 11 is a quenching device; 12 is a high pressure separator; 13 the high pressure recycle system and 14 the low pressure separator.

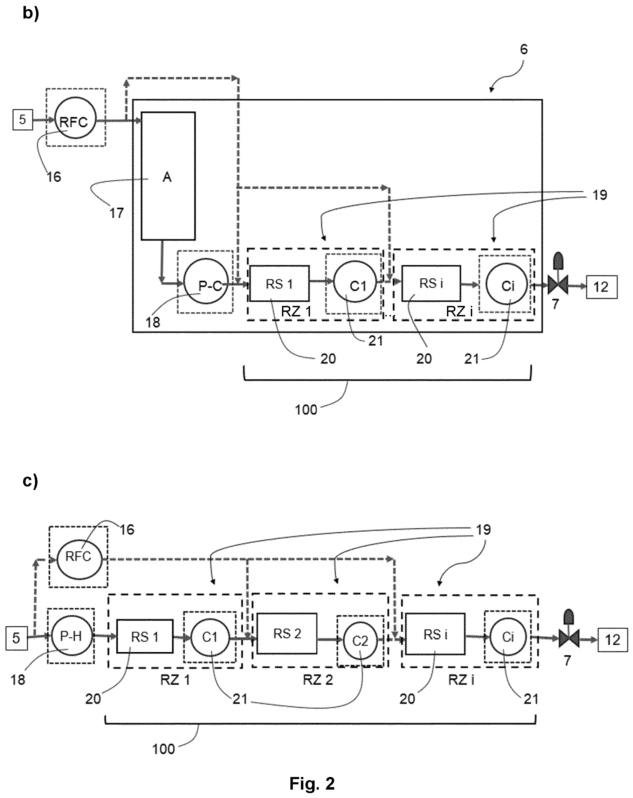

Fig. 2 shows schematically a reference example and some embodiments of a section of the plant of the present disclosure including the reactor sections (within the squares with thinner dashed lines) where the process provides more potential benefits utilizing several reactor configurations. Fig. 2a: Autoclave-Autoclave configuration (reference example); Fig. 2b: Autoclave-tubular reactor configuration; Fig. 2c: Tubular reactor configuration. RFC: Reactor feed coolers; IC: intercooler (a super cooler); PRC: Post-reactor cooler; P-C: pre-cooling; P-H: pre-heater; RZ: reaction zone; RS: reaction section; C: super cooler.

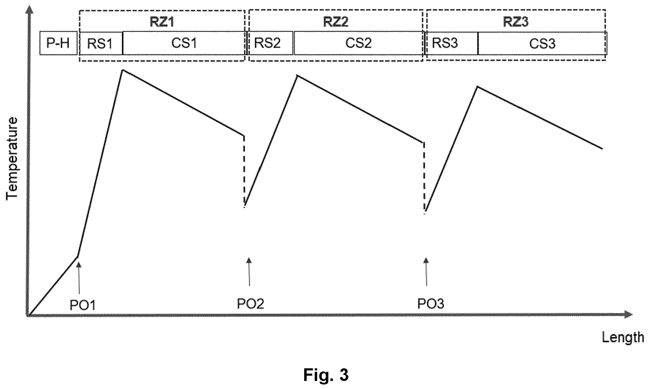

Fig. 3 shows schematically a typical temperature profile in the tubular zones and split between reaction section and cooling section within the reaction zones of a tubular reactor configuration such as the one of Fig. 2c.

### Detailed description of the invention

All terms as used herein in this application, unless otherwise stated, shall be understood in the ordinary meaning as known in the art. Other more specific definitions terms as used in the present application are as set forth below and are intended to apply uniformly through the specification and claims unless an otherwise expressly set out definition provides a broader definition.

The term "KTA", as used herein, refers to line or plant capacity, expressed in terms of Kilo Tons per year.

The term "comonomer", as used herein, refers to a compound that may be present in the reaction mixture in a controlled quantity and that reacts with ethylene monomer in a co-polymerization reaction.

The term "recycle stream", as used herein, refers to recycle component(s) that are separated from the polymer after exiting a reactor, and are fed, after re-pressurization, to one or more reaction zones, at the inlet to each reaction zone.

The term "recycle connection", as used herein, refers to a connection positioned in fluid communication between the outlet of the reactor and the inlet of the reactor allowing reducing the content of one or more side-products, such as a waxy product, in the fluid flow, leading a recycle stream. Particularly, the recycle connection has an inlet in fluid communication with at least one output of a separator such as a high-pressure separator and an outlet in fluid communication with the inlet of a compressor such as a primary or a secondary compressor.

The term "fluid communication" signifies that fluid can pass from a first component to a second component either directly or via at least a third component. The term "direct fluid communication" signifies either that no other component is located between the first and the second component or that one or more trivial components (e.g., joining tubes, valves) are located between the first component and the second component.

The term "polymer", as used herein, refers to a compound prepared by polymerizing monomers, whether of the same or a different type. The generic term polymer thus embraces the term homopolymer (employed to refer polymers prepared from only one type of monomer), and the term copolymer as defined hereinafter. Trace amounts of impurities can be incorporated into and/or within the polymer structure.

The term "copolymer", as used herein, refers to polymers prepared by the polymerization of ethylene and one or more comonomers.

The term "ethylene-based polymers", as used herein, refers to polymers comprising a majority amount of polymerized ethylene (based on the weight of the polymer), particularly more than 50 wt. % ethylene monomer and one or more comonomers.

The terms "ethylene polymer" and "ethylene (co)polymer", as used herein, refers to polymers comprising ethylene, and includes both ethylene homopolymer and ethylene copolymers, unless otherwise stated or deduced from the context.

The term "reactor configuration", as used herein, refers to the devices used to polymerize monomers to obtain a polymer or copolymer. Examples of reactor configurations are shown in Figs. 2a through 2c.

The term "autoclave", as used herein, refers to a particular reactor configuration section where the reaction takes place inside an agitated vessel, with one or multiple reaction sections within it, different inside diameters (ID) and length to ID ratios.

The term "tubular reactor", as used herein, refers to a particular reactor configuration where a reaction takes place inside a long tube having a specific ID, that length can go from 100 m to 5,000 m or more. Example of a tubular reactor configuration is shown in Fig. 2c.

The term "autoclave-tubular reactor", as used herein, refers to a particular reactor configuration where a reaction takes place in an autoclave vessel, with one or multiple reaction sections within it, followed by a tubular reactor. Example of this configuration is shown in Fig. 2b.

The term "reactor feed cooler", as used herein, refers to a particular section of the reaction system, where the ethylene or, alternatively, the ethylene/comonomer mixture is cooled prior entering any of the autoclaves and/or tubular reactor.

The term "intercooler", as used herein, refers to a particular section between two autoclave reactors, where the ethylene/polymer mixture or, alternatively, the ethylene/comonomer/polymer mixture, is cooled prior entering to a second autoclave vessel.

The term "super cooler", as used herein, refers to a cooler designed to operate at high pressure, particularly at a pressure from 120 MPa to 350 MPa or higher, comprising parallel flow tubes with an ID smaller than the ID of the inside diameter of the reaction section (i.e., of the tube of the reaction section) of a tubular reactor, such as parallel flow tubes with and inside diameter from 10 % to 90 %, or from 20% to 80%, or from 25% to 75% of a tubular reactor. Super coolers increase the density of heat transfer area per unit of footprint, providing potential benefits as described through the present disclosure.

The term "ethylene side stream", as used herein, refers to a particular configuration where a portion of the compressed ethylene is introduced into the tubular section at different points through the length of the reactor.

The term "downstream", as used herein, refers to a point in a polymerization process (for example, an apparatus or stream) that comes after a point of reference (for example, a reactor)

The term "upstream", as used herein, refers to a point in a polymerization process (for example, an apparatus or stream) that comes before a point of reference.

The term "process stream", as used herein, refers to composition comprising one or more reactants coming into a reactor, or a composition comprising polymer coming from a reactor.

The term "inlet" signifies the point at which a fluid enters a component, and the term "outlet" signifies the point at which a fluid exits a component.

The term "compressed ethylene", as used herein, refers to ethylene, with or without comonomer, compressed by secondary compressor to a pressure equal to or greater than 120 MPa, where ethylene is the majority component, and may include other components included in the "recycle stream".

The term "compressed reaction mixture", as used herein, refers to the resultant mixture of the "compressed ethylene" and other components that may be added after the secondary compressor discharge (e.g., fresh comonomer).

The term "modifier", as used herein, refers to a compound present in the reaction mixture at a controlled quantity to the process to control the molecular weight and the melt flow index (MFI) of a produced polymer.

The term "initiator", as used herein, refers to a compound added to the process to initiate the free radical polymerization process.

The term "molecular weight distribution", as used herein, refers to the distribution between the number of molecules of each polymer species (N) and the molecular weight of that species (Mi)

The term Mw / Mn (also known as polydispersity index) refers to the ratio of weight average molecular weight (Mw) to the number average molecular weight (Mn), i.e. (Mw/Mn). Mn and Mw are determined as follow: ${M}_{n} = \sum {M}_{i} {* N}_{i} / \sum {N}_{i} {M}_{w} = \sum {{M}_{i}}^{2} {* N}_{i} / \sum {M}_{i} {* N}_{i}$ where, Ni is the number of molecules having molecular weight Ni in each polymer sample.

As used herein, the term "velocity" refers to the average speed of a fluid flowing through a defined cross-sectional area.

It is noted that, as used in this specification and the appended claims, the singular forms "a", "an", and "the" include plural referents unless the context clearly indicates otherwise. Thus, the indefinite articles "a" and "an" are synonymous with "at least one" or "one or more".

As mentioned above, the present invention refers to a plant for the manufacture of ethylene homopolymers and copolymers, the plant comprising the following components in fluid communication: a) a secondary compressor; b) a temperature adjusting system; c) a reaction system comprising a tubular reactor having two or more reaction zones, wherein each reaction zone comprises a reaction section and a super cooler, wherein the super cooler comprises two or more parallel flow tubes having an inside diameter smaller than the inside diameter of the reaction section; and d) a controller configured to allow that a fluid has a residence time in the reaction section of no more than 60 seconds.

The controller is configured to control the speed of the fluid and, thus, the residence time. The flow of the fluid can thus be controlled by the controller.

The reaction zones of the tubular reactor are consecutive, and the super cooler (cooling section) of one reaction zone is in direct fluid communication with the reaction section of the next (downstream) reaction zone.

The temperature adjusting system, as used herein, refers to component of the plant which allow a flow of fluid through an interior between an inlet and an outlet and may be used for increasing or reducing the temperature of the fluid in a controllable manner. The temperature adjusting system can be either a heating system such as a pre-heater wherein the fluid is heated before entering to the reaction section, or a cooling system such as a pre-cooler wherein the fluid is cooled before entering to the reaction section.

In the context of the present disclosure, reference to a single cooling tube means a single tube, or a topological equivalent, connecting an input and an output of the single cooling tube. Where two or more tubes arranged in parallel connecting the input and the output (or a topological equivalent) are meant, reference will be made to two or more parallel flow tubes.

In an embodiment, the tubular reactor is configured to operate at high pressure (particularly, at a pressure from 120 MPa to 350 MPa or higher) and at high temperature (e.g., equal to or higher than 110 °C).

For the required operating conditions (temperature, pressure), the residence time in a reaction section of an ID and velocity (flow) of the fluids passing through the reactor is controlled by adjusting the length of the reaction section.

In another embodiment, optionally in combination with one or more features of the embodiments defined above, the tubular reactor comprises a tube with a length from 100 m to 10,000 m, or from 500 m to 5,000 m, or from 1,000 m to 4,000 m. Particularly, the tube (an thus, also the reaction section of the tubular reactor) has an inside diameter in a range from 20 mm to 150 mm, or from 25 mm to 100 mm, or from 25 mm to 50 mm.

Those skilled in the art are familiar with the design of tubular reactors, wherein the cooling sections comprise a series of tubes of similar ID to the ID of the tube of reaction section, and both the ID of the tubes and the number of tubes in series of the cooling section depend on the desired heat transfer area, while maintaining all the ethylene / polymer mixture within the same media.

The present invention provides an engineering solution to increase the density of heat transfer area per unit mass of compressed reaction mixture, when operating at the high-pressure conditions used in the technology. This is obtained by using super coolers, that is by dividing the ethylene/polymer mixture into several parallel flows, utilizing a high-pressure distributor designed for the purpose. The number of parallel flows and tube length of each one are design parameters. There is no maximum number of parallel flows, being two the minimum number, and being the actual number determined by the ID of the parallel tubes and the desired velocity.

In another embodiment, optionally in combination with one or more features of the embodiments defined above, the super cooler is configured to be operated with a pressure drop between the super cooler inlet and the super cooler outlet below about 20 MPa, or below about 15 MPa, or, particularly, below about 5 MPa. In an example, the pressure drop between the input and the output is as low as about 0.2 MPa.

In a particular embodiment, optionally in combination with one or more features of the embodiments defined above, the ID of the parallel flow tubes is from 10 % to 90 %, or from 20 % to 80 %, or from 25 % to 75 %, of the ID used in the reaction section tubes, i.e, of the reaction section.

It is also known by those skilled in the art the use of a closed loop pressurized hot water system to remove the heat from the reaction and cooling sections. Operating hot water temperatures depend on multiple variables and can go from 70 °C up to 210 °C. However, depending on the number of selected parallel flows, and new tube ID's, cooling can follow a double-pipe flow arrangement or a shell & tube arrangement, where hot water flows on the jacket side or the shell side.

In another embodiment, optionally in combination with one or more features of the embodiments defined above, the super cooler follows a double-pipe arrangement, that is, the parallel flow tubes are cooled in a double-pipe flow arrangement.

In another embodiment, optionally in combination with one or more features of the embodiments defined above, the residence time in each reaction section is of less than 15 seconds, preferentially from 5 to 12 seconds.

In another embodiment, optionally in combination with one or more features of the embodiments defined above, the speed of fluid to be cooled flowing in the two or more parallel flow tubes is from 4 m/s to 30 m/s, particularly, from 10 m/s to 20 m/s, more particularly, from 15 m/s to 18 m/s.

In another embodiment of the plant of the present disclosure, optionally in combination with one or more features of the embodiments defined above, the temperature adjusting system is configured to heat a fluid, i.e., is a pre-heating section (as an example, see Fig. 2b). In a particular embodiment, the plant further comprises a reactor feed super cooler 16 with an inlet in fluid communication with the outlet of the secondary compressor and an outlet in fluid communication with an inlet in a side-stream feed of the tubular reactor, the reactor feed super cooler comprises two or more parallel flow tubes as defined above having an inside diameter smaller than the inside diameter of the reaction section.

In another embodiment of the plant of the present disclosure, optionally in combination with one or more features of the embodiments defined above, the reaction system comprises the temperature adjusting system, wherein the temperature adjusting system is configured to cool a fluid, and wherein the reaction system further comprises an autoclave 17 in fluid communication between the with the outlet of the temperature adjusting system 18 (as an example, see Fig. 2a). In a particular embodiment, the plant further comprises a reactor feed super cooler 16 with an outlet in fluid communication with an inlet of the autoclave and, optionally, an outlet in fluid communication with an inlet in a side-stream feed of the tubular reactor, the reactor feed super cooler comprising two or more parallel flow tubes having an inside diameter smaller than the inside diameter of the reaction section.

In an embodiment, the autoclave is configured to operate at high pressure (particularly, at a pressure from 120 MPa to 350 MPa or higher) and at high temperature (e.g., equal to or higher than 110 °C).

As mentioned above, the present invention also refers to a process for producing an ethylene polymer by polymerizing ethylene or, alternatively, ethylene and a comonomer, in a plant as defined herein.

In an embodiment, the process is a continuous process.

In an embodiment, the process of the present disclosure comprises:
a) compressing ethylene monomer at a pressure equal to or higher than 120 MPa through the secondary compressor, particularly at a pressure from 120 MPa to 360 MPa, or from 150 MPa to 300 MPa;
b) optionally, adding a comonomer or, alternatively a comonomer and a modifier to obtain a compressed reaction mixture;
c) introducing the compressed ethylene or the compressed reaction mixture into the reaction system;
d) adding at least one free radical initiator to each reaction zone in order to start a polymerization reaction and to obtain as ethylene polymer or an ethylene copolymer; and
e) separating the obtained ethylene polymer or ethylene copolymer;
wherein in the reaction section of each reaction zone the reaction mixture has a residence time of no more than 60 seconds, particularly equal to or lower than 15 seconds, more particularly, from 5 to 12 seconds.

In another embodiment of the process of the present disclosure, optionally in combination with one or more features of the embodiments defined above, the free radical initiator comprises or consists of at least two organic peroxides.

In another embodiment of the process of the present disclosure, optionally in combination with one or more features of the embodiments defined above, the speed of fluid to be cooled flowing in the two or more parallel flow tubes is from 4 m/s to 30 m/s, particularly, from 10 m/s to 20 m/s, more particularly, from 15 m/s to 18 m/s.

In another embodiment of the process of the present disclosure, optionally in combination with one or more features of the embodiments defined above, after step a) or, optionally, step b) the compressed ethylene or the compressed reaction mixture has a temperature, and the temperature is adjusted before introducing the compressed ethylene or the compressed reaction mixture into the reaction system.

In another embodiment of the process of the present disclosure, optionally in combination with one or more features of the embodiments defined above, the reaction system consists of a tubular reactor and the temperature adjusting system is configured to heat the compressed ethylene or the compressed reaction mixture, i.e., the temperature adjusting system is a pre-heater 18 (Fig. 2c). In a particular embodiment, the compressed ethylene or the compressed reaction mixture is introduced into the tubular reactor at a temperature from 50 °C to 200 °C, particularly from 60 °C to 160 °C, more particularly from 70 °C to 140 °C.

As mentioned above, it is generally known that, when using autoclave only configurations, lower reactor feed temperatures allow to increase the ethylene and/or comonomer conversion. When using autoclaves, either single or in combination with other autoclave or with a tubular reactor, reactor feed coolers (RFCs) are typically used to cool ethylene and comonomer feeds to temperatures that can go as low as -20 °C. In the process of the present disclosure, RFCs can be a super cooler as defined herein above.

In another embodiment of the process of the present disclosure, optionally in combination with one or more features of the embodiments defined above, the reaction system further comprises an autoclave 17 in fluid communication between the with the outlet of the temperature adjusting system 18 and an inlet of the tubular reactor, and the temperature adjusting system is configured to cool the compressed ethylene or the compressed reaction mixture, i.e., the temperature adjusting system is a pre-cooling system 18 (Fig. 2b). In a particular embodiment, the compressed ethylene or the compressed reaction mixture is introduced into the tubular reactor at a temperature from -20 °C to 100 °C, particularly from 0 °C to 90 °C, and more particularly from 40 °C or lower to 80 °C or lower.

In another embodiment of the process of the present disclosure, wherein the reaction system further comprises an autoclave 17, the plant further comprising a reactor feed super cooler 16 as defined above, and the compressed ethylene or the compressed reaction mixture is introduced into the autoclave reactor at a temperature from -20 °C to 70 °C.

It is also known by those skilled in the art the use of organic peroxide cocktails (i.e. a mixture of at least two organic peroxides) to initiate or reinitiate the reaction in each reaction section.

Therefore, in an embodiment of the process of the present disclosure, optionally in combination with one or more features of the embodiments defined above, the free radical initiator is a cocktail of organic peroxides, that is, a mixture comprising or consisting of at least two organic peroxides covering the temperature range on each reaction section, typically in the range from 110 °C to 330 °C. The use of peroxides and peroxide cocktails, as used in this invention, were described at WO2021250054 and WO2024089081 A1.

As used herein, the expression "covering the temperature range on each reaction zone", related to a mixture of organic peroxide as free radical initiators, means that each organic peroxide provides an optimum source of radicals through a narrow temperature range to sustain the reaction (i.e., a particular organic peroxide will have a convenient decomposition rate over a relatively narrow temperature range) and that the combination of all the organic peroxides allows covering the full above mentioned temperature range.

In an embodiment of the process of the present disclosure, optionally in combination with one or more features of the embodiments defined above, at least one organic peroxide has a half-life from 2 seconds to 0.05 seconds at the control temperature of the reaction zone.

In another embodiment of the process of the present disclosure, optionally in combination with one or more features of the embodiments defined above, the free radical initiator cocktail comprises the combination of two or more organic peroxides, such that the desired temperature range where each component is active (e.g. providing free radicals) is within their 2 seconds half-life time and their 0.05 seconds half-life time.

In another embodiment, optionally in combination with one or more features of the embodiments defined above, the compressed ethylene monomer is discharged from the secondary compressor where fresh comonomer and fresh modifier are added at the suction of the compressor or are added into one or more points located between the secondary compressor and the reactor system.

In another embodiment, optionally in combination with one or more features of the embodiments defined above, the compressed ethylene monomer is from 55 wt.% to 100 wt.% total reaction mixture.

In another embodiment, optionally in combination with one or more features of the embodiments defined above, the temperature range on each reaction zone varies from the initiation to the end of the reaction within a range from 110 °C to 300 °C.

For example, if the desired temperature range on the first reaction zone of a tubular reactor is from 140 °C to 300 °C, a cocktail with the following free radical initiators will be suitable for the process of the present disclosure:

**Table 2: Suitable Free Radical Initiators for the process**

| CHEMICAL NAME | T (°C) for t ½ = 2 s | T (°C) for t ½= 0.05 s |
|---|---|---|
| Di(sec-butyl) peroxide dicarbonate (DBPC) | 132 | 185 |
| Tert-butyl peroxypivalate (TBPPI) | 148 | 198 |
| 1,1,3,3-Tetramethylbutyl peroxy-2-ethylhexanoate | 172 | 227 |
| Tert-butyl peroxy-3,5,5-trimethylhexanoate | 194 | 247 |
| Di-tert butyl peroxide | 225 | 280 |

In a particular embodiment, the free radical initiator **consists of** at least two organic peroxides, such that the desired temperature range where each free radical initiator is active is within the 2 seconds half-life time and the 0.05 seconds half-life time of the free radical initiator. Particularly, the free radical initiator can consist of the five initiators listed above.

In an advantageous embodiment, the free radical initiator cocktail is a mixture of several organic peroxides comprising a concentration of a low temperature initiator such that a rapid reaction take off is ensured, and the production of high molecular weight material is avoided. The inventors have found that an effective use of peroxide cocktails allows an effective separation of the reaction section and the cooling section within a reaction zone of a tubular reactor.

In another embodiment, optionally in combination with one of more features of the embodiments defined above, the invention can be used during the production of ethylene homopolymer, or in combination with comonomers, which can be selected from, without being limited to, the group consisting of:
- ethylene vinyl acetate (VA).
- propylene, 1-butene, iso-butene, 1-hexene or 1-octene.
- acrylates like methyl acrylate (MA), ethyl acrylate (EA), butyl acrylate (BA), hexyl acrylate (HA), methyl methacrylate (MMA), glycidyl methacrylate (GMA), n-butyl methacrylate, 2-ethylhexyl methacrylate, hydroxyethyl methacrylate, and mixtures thereof.
- acid copolymers like methacrylic acid (MAA), acrylic acid (AA), maleic acid, maleic anhydride (MAH), and mixtures thereof.
- silane like vinyl trimethoxy silane, vinyl triethoxy silane, vinyltrimethylsilane, and mixtures thereof; and
- dienes like 1,7-octadiene (OD), 1-9 decadiene (DD), and mixtures there of

The comonomer content, in polymerized form, in the ethylene-base copolymer is from 0.1 wt. % to 45 wt.%, based on the weight of the ethylene-based copolymer.

The modifier involves the termination of growing polymer chains, thus limiting the ultimate molecular weight of the polymer material. By controlling the concentration of the selected modifier, the length of polymer chains, and hence the molecular weight can be controlled. The Melt Flow Index of a polymer, which is related to the Mn, is controlled the same way. Examples of modifiers include, without being limited to propylene, 1-butene, isobutene, 1-hexene, 1-octene, n-butane, isobutane, methyl ethyl ketone, and acetic anhydride. Usually, the modifier can be an amount from 0.05 wt.% to 10 wt.%, based on the weight of polymerizable monomers.

Some modifiers such as propylene, 1-butene, isobutene, 1-hexene and 1-octene can also participate in a co-polymerization reaction.

Fig. 1 schematically depicts an ethylene (co)polymerization plant 1, which is for illustrative purposes and is not to be considered as limiting the scope of the present disclosure. The skilled person, having knowledge of plants for performing (co)polymerization, will know that ethylene (co)polymerization plants and may include further components or some variations fitting for achieving the effects of the present disclosure. An ethylene feed line 2 supplies fresh ethylene to a primary compressor 3. The ethylene discharged from the primary compressor 3 flows via conduit 4 having a valve to the secondary compressor 5. A medium pressure recycling system 13 supplies unreacted (recycled) ethylene to secondary compressor 5. The primary compressor 3 may be a single compressor or may be two or more compressors in series or parallel that pressurize the fresh ethylene to the pressure of the ethylene recycle stream (not shown). The ethylene recycle stream may contain some unreacted comonomer and/or unreacted modifier. In some ethylene manufacturing plants, the ethylene discharged from the primary compressor 3 is divided into two streams: (a) one stream being combined with recycle ethylene and fed to the suction of the secondary compressor 5; and (b) another stream 15 injected into the ethylene/polymer mixture downstream of the high-pressure reactor pressure control valve 7. This embodiment provides a rapid cooling of the ethylene/polymer mixture before entering the product separation unit 12. An alternative is the use of a product cooler (not shown) and gets similar result.

The secondary compressor 5 compresses the ethylene to a pressure of at least 150 MPa and up to 360 MPa and higher for supply to the reactor system 6 (see also Fig. 2 for some embodiments of 6). The secondary compressor 5 is typically a unit driven by a single motor but may, alternatively, comprise of two or more compressors in series or parallel driven by separate motors (not shown).

The modifier, the comonomer, or both are injected from stations 8 (comonomer) and 9 (modifier) in liquid form at a pressure from 120 MPa to 360 MPa at specific locations between the secondary compressor 5 discharge and the reactor system 6.

In the process of polymerizing ethylene in reaction system 6, once established the desired throughput of ethylene through the secondary compressor 5 and into the reactor system 6, the pressure in the reactor can be controlled by the high-pressure control valve 7, through which the product mixture exits the reactor system 6. Immediately downstream of the high-pressure control valve 7 there can be a jet pump or "cold gas inlet" device 11, where cold ethylene stream from the primary compressor cools the reaction mixture to the desired temperature. After the high-pressure reactor control valve, the reaction mixture is a phase-separated state.

Product separation may be carried out in one stage separation; however, two or three-stage separation is of general practice. For illustration, Fig. 1 includes a two-stage separation system. Upon being cooled, the reaction mixture enters a medium-pressure separator 12, where the first separation of the polymer from unreacted ethylene is carried out. Overhead gas from medium-pressure separator 12 flows into medium-pressure recycle system 13, where the unreacted ethylene is cooled and returned to suction of the secondary compressor 5.

The polymer flows from the bottom of the medium-pressure separator 12 into low-pressure separator 14, separating almost all of the remaining ethylene from the polymer. The remaining ethylene is transferred either to a flare (not shown) or a purification unit (not shown) or is recycled and returned to the primary compressor 3. Molten polymer flows from the bottom of the low-pressure separator 14 to an extruder (not shown) for extrusion, cooling and pelletizing.

Critical engineering design considerations must be considered when utilizing the reactor configuration of the present disclosure for the separation of reaction section from a cooling section within a reaction zone. This is represented graphically at Figs. 2b and 2c, and Fig. 3. Each reaction zone is preceded by an organic peroxide injection, cocktail or individual, and, optionally, an ethylene side-stream, optionally with comonomer and modifier. According to the present disclosure, the reaction section is designed for a single reaction media, where all the ethylene mixture or ethylene / polymer mixture entering the reaction zone reacts with the used peroxides and produces polymer, with a residence time such that allows consumption of all the peroxides. Residence time in the tubular section of a reaction zone should be no more than 60 seconds, better less than 15 seconds, preferentially from 5 seconds to 12 seconds.

Once the ethylene/polymer mixture exit the reaction section of the reaction zone, the free radical polymerization is considered essentially consumed, and the flow enters what is considered the cooling section of the reaction zone, as shown in Fig. 3.

As mentioned above, as can be seen from the results of the Examples and Comparative Examples, the engineering solution provided with the present disclosure provides not only lower pressure drop, lower electricity consumption, and the option to increase productivity at a given product quality, but also some additional advantages that has a direct impact to the process safety of the installation such as reduced ethylene inventory at reactor bay and higher non-congestion index, and reduced capital cost.

The first additional advantage is the amount of ethylene inventoried within the reactor bay. It is common practice by those designing and operating plants utilizing high pressure technology, that the reaction section is built inside reactor bays, with concrete walls to protect the installation and its personnel from explosion caused by ethylene leak at high pressure and high temperature. The amount of ethylene inventoried inside the reactor bay is one of the main variables utilized to determine the size of the bay. Two bay design approaches are commonly used: a) congested bays, and b) non-congested bays. Most plants designed since 1960's to late 1970's were designed utilizing the congested bay concept, where little to nonnatural ventilation of the reactor bay exits, and in the event of explosion, the technology relied on a thick concrete wall to protect people and installation outside the bay. Plants designed during 1980's and later relies on the concept of non-congested and self-ventilated bays, where design is such, having still the bay within concrete walls, a natural flow of air is allowed to favor the natural dispersion of ethylene in case of a release.

Over the years, the inventors have developed a methodology to determine the level of congestion in a reactor bay. Reactor bays designed for autoclaves, where the mass of ethylene is confined in the volume of the reactor autoclave vessel, follows the concept of congested bays, within a concrete wall designed to resist. The autoclave reaction vessel is only a few meters in length where most of the reaction occurs. This configuration requires the placement of process piping, instrumentation, electrical systems as well as process relief and fire detection/prevention systems within a few meters of the vessel resulting in the area congestion increasing from low to medium or high. This increase then increases the probability of the explosion becoming more intense and possibly accelerating into a detonation. Conversely, the tubular reactor configuration results in long sections (30 to 60 meters in length; total length up to 5000 meters) with the supporting systems distributed across the total length.

Installed autoclave reactors are in a vertical orientation, where the supporting process and utilities must be attached. Expanding the bay area does not change the congestion within the immediate area surrounding the reactor and would not impact the intensity of a vapor cloud explosion around the reactor.

The methodology used for autoclave reactors has changed very little since the early designs in the late 1950's. On the other side, reactor bays designed for tubular reactor plants, or auto-tube having a long tubular section, the plot area occupied by the tubular section is significantly larger. Due to the configuration of the tubular reactor, the number of flanges and tubes that a potential leak may develop is significantly higher. Over the years, experience has shown that those reactor bays, designed with a non-congested concept, even experiencing eventually an ethylene leak, have not resulted in major explosion. On the contrary, there are reported experiences of plants having tubular reactor bays designed with a congested concept that reported experiences which resulted in explosion inside the bay after an ethylene leak.

The methodology developed by the present inventors is empirical and based on actual operating facilities, some reporting ethylene leaks, and some of these resulting in actual explosion of ethylene inside the reactor bay. An explosion in the reactor bay is a major event, which significantly jeopardizes the future of the facility, which may stay out of business from six months to a year or more, depending on the damage created inside and outside the reactor bay.

Based on their observations, inventors have developed the concept of Non-Congestion Index based on the following factors:
a. Under a fixed plot area dimension, a bay is more congested when more ethylene inventory is kept inside.
b. Higher height reactor walls reduce the amount of natural air entering the bay to disperse an eventual leak via natural ventilation.
c. Larger reactor bay plot area favors natural ventilation and reduces congestion.

Thus, the Non-Congestion Index (in m/ton) is defined as follows (see data in Table 3 below): $Non - Congestion Index = \left(Reactor Bay area\right) / \left(Height*Tons of C2 Inventory\right)$

**Table 3: Different reactor bays in operation and non-congestion index**

| Company Unit Congestion | A Line 1 High | A Line 2&3 High | B Line 1 Med-Low | C Line 1 Medium | D Line 1 High | E Line 1&2 Low-low | F Line 3 High |
|---|---|---|---|---|---|---|---|
| C2 Inventory, Tons | 1.1 | 0.5 | 1.6 | 5.8 | 1.2 | 2.4 | 1.1 |
| Bay Area, m² | 213 | 213 | 680 | 2407 | 212 | 2774 | 213 |
| Bay Height Wall, m | 18 | 18 | 8.5 | 8.6 | 7 | 17.6 | 18 |
| Last 10 years report explosion | Yes | No | No | No | No | No | Yes |
| Last 10 years report leak | Yes | Yes | Yes | ? | Yes | Yes | Yes |
| Number of reported explosions | 2 | - | - | - | - | - | 1 |
| Non-Congestion Index, m/ton | 11 | 25 | 51 | 48 | 25 | 66 | 11 |

Inventors suggest when designing reactor bays for the autoclave-tube or tubular reactor plants, within concrete walls, the non-congestion index to be greater than 45.

Comparative Example 3 design, summarized in Table 4, shows the ethylene inventory inside the reactor bay is 2.65 Tons. Utilizing a reactor bay of 41 m long, 31 m width and 11 m high walls, provides a non-congestion index of 46.

The engineering design proposed by inventors, when applicable to Examples 1 and 2, and shown at Table 5, indicates both cases a reduction of ethylene inventory to 1.85 Tons and 2.34 Tons respectively, resulting in non-congestion index of 66 for Example 1 and of 52 for Example 2. Under this outcome, the designer can opt to reduce the size of the reactor bay in the case of Example 1 and capitalize the savings in capital associated with a reduced footprint in the plant consequence of the smaller reactor bay.

Besides, the inventors have found that the proposed engineering solution of the present disclosure allows for savings in equipment costs due to reduced weight of high-pressure steel required at tubular section, consequence of the reduced ID of the tubes used in the coolers. While Comparative Example 3 requires 238 Tons of high-pressure C-steel, Example 1 requires 182 Tons of HP C-Steel and example 2 requires 222 Tons of HP C-Steel.

Comparative Example 3 and Examples 1 and 2 clearly indicate the engineering design solution of the present disclosure provides the following advantages for same MFI and Mw/Mn:
- lower reactor pressure drops;
- lower electricity consumption per Ton of ethylene polymer produced;
- similar or, optionally, higher capacity;
- reduced ethylene inventory at reactor bay and higher non-congestion index;
- capital cost reduction associated with lower steel requirements and optimized reactor bay size.

The process of the present disclosure provides a broad range of ethylene polymers and copolymers having narrow molecular weight distribution, while providing the additional advantages mentioned above. These advantages make the process of the present disclosure particularly suitable for the preparation of ethylene copolymers as a raw material in the production of different articles of manufacture for multiple applications. Articles can be manufactured by processing the product obtainable by the process of the present disclosure. The articles can be formed by conventional methods known in the art, such as by extrusion.

Therefore, in a further embodiment, the process of the present disclosure further comprises processing the ethylene copolymer into an article of manufacture.

The super cooler disclosed herein above, can also be used in a plant for producing an ethylene polymer comprising as reaction system an autoclave only reactor configuration, i.e., a reactor configuration comprising only one or more autoclaves as reactors (see Fig. 1a as a non limiting example of a configuration comprising two autoclaves). In such a plant, the temperature adjusting system can be reactor feed cooler (RFC) 16. If the autoclave only configuration reactor system comprises only one autoclave, the plant can further comprise a post-reactor cooler (PRC) between the autoclave and a polymer separation section (before or after a let down valve). If the autoclave only reactor configuration comprises two or more autoclaves 17, the reaction system further comprises an intercooler 22 between the at least two adjacent autoclaves 17, and the plant can further comprise a post-reactor cooler (PRC) 23 between the reaction system and a polymer separation section (before or after a let down valve). In an only autoclave reactor configuration, any of the reactor feed cooler, the intercooler, the post-reactor cooler, or all of them can be a super cooler as defined herein above.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim are solely for attempting to increase the intelligibility of the claim and shall not be construed as limiting the scope of the claim. Furthermore, the present invention covers all possible combinations of particular and preferred embodiments described herein.

### Examples

The following experimental data, including molecular weights (expressed as Mn and Mw) and polydispersity index, conversion rate, and production rate are calculated from modelling based on original samples. They can be measured by gel permeation chromatography (GPC) with refractive index detector, as provided by Waters (model 717) plus Autosampler with a Water 2487 refractive index detector, following ASTM D-6474 method.

The percentage of co-monomers in the polymer is calculated from modelling based on the original samples where a calibrated Fourier-Transformer Infrared (FTIR) spectroscopy method was used, as provided by Fisher (Nicolet). ASTM D-5594 and ASTM D-3594 were used for the determination of comonomer content in the corresponding ethylene copolymer. Alternative is the use of 1H Nuclear Magnetic Resonance (NMR) obtained in a Brucker 500 MHZ equipment.

### Comparative Example 1

A process for the production of EVA copolymers was carried out with a typical cooling zone configuration in a tubular section of a tubular reactor or autoclave-tube configuration. The total plant capacity was 200 KTA. The secondary compressor flow was 95 Tons/h with a vinyl acetate content of 18 wt.% at a pressure of 218 MPa and a temperature of 225 °C. The gas density under these conditions was 538 kg/m³. The cooling section consisted of 18 tubes in series of 17 m length per tube and 65 mm ID. The velocity through the tubes was 15 m/s, and the heat transfer area was 62.5 m². The mass of the compressed ethylene/polymer mixture in the cooling zone was 0.55 Tons and the heat transfer area per Ton within the cooling zone was 114 m²/Ton.

### Reference Example 1

A similar process than in Comparative Example 1 was carried out wherein the heat transfer area per Ton of the compressed ethylene/polymer was increased by utilizing a cooling zone modular design having a three parallel pass configuration with 48 tubes of 10 m length (16 tubes in series per parallel pass) and 40 mm ID. The velocity through the tubes was 13 m/s, and heat transfer area within the cooling zone was 60.3 m². The mass of the compressed ethylene/polymer mixture in the cooling zone was 0.32 Tons, and the heat transfer area per Ton within the cooling zone was 186 m²/Ton.

### Reference Example 2

A similar process than in Comparative Example 1 was carried out wherein both the heat transfer area and the heat transfer area per Ton within the cooling zone were increased. Under the same gas flow conditions, it was possible a cooling zone modular design which used a four parallel pass configuration with 60 tubes of 10 m length (15 tubes in series per parallel pass) and 35 mm ID. **The** velocity through the tubes was 13 m/s, and heat transfer area within the cooling zone was 66.0 m². **The** mass of compressed ethylene/polymer mixture in the cooling zone was 0.31 Tons, and the heat transfer area per Ton within the cooling zone was 212 m²/Ton

**The** ratio of ID of the Reference Example 1 to the Comparative Example 1 (typical design) was 40 mm / 65 mm = 61.5 %, while the heat transfer area per Ton of ethylene (C2) within it increased by 63 % (186/114 - 1 = 0.63). For the case of Reference Example 2, the ID ratio is 35 mm / 65 mm = 53.8%, while the heat transfer area per Ton of C2 within it increased by 86 % (212/114 -1 = 0.86).

### Comparative Example 2

A similar process than in Comparative Example 1 was carried out, except for the use of a typical cooling zone utilized in a 300 KTA EVA tubular reactor design. Secondary compressor flow was 150 Tons/year with a VA content of 28 % wt. at a pressure of 237 MPa and a temperature of 200 °C. Gas density under these conditions was 588 kg/m3. **The** tube cooling section consisted of 24 tubes in series of 17 m length per tube and 80 mm ID. Velocity through the tube was 14 m/s, and the heat transfer area was 102.5 m². **The** mass of the compressed ethylene/polymer mixture in the cooling zone was 1.21 Tons and the heat transfer area per Ton within the cooling zone was 85 m²/Ton.

### Reference Example 3

A similar process than in Comparative Example 1 was carried out, except for the use of two modules of 48 tubes each (2 * 48 = 96 tubes) of 10 m length configured in a four parallel path configuration, and 40 mm ID. **The** velocity through the tube was 14 m/s, and the heat transfer area was 120.6 m² (17 % more area). **The** mass of the compressed ethylene/polymer mixture in the cooling zone was 0.71 Tons, and the heat transfer area per Ton within the cooling zone was 170 m²/Ton.

**The** ration of ID of Reference Example 3 to the reference design case was 40 mm / 80 mm = 50 %, while the heat transfer area was increased by 17 % (120.6 m² / 102.5 m²) and the heat transfer area per Ton of C2 within it increased by 100 % (170/85 - 1 = 1.00).

It is known by those skilled in the art of high-pressure polymerization technology that final polymer properties are dependent, among other variables, of the reactor pressure and the pressure drop through the tubular section.

As shown in the reference examples above, the use of a super cooler comprising parallel flow tubes with ID smaller than the ID of the tubular reaction tube (such as with an ID from 20 % to 80 % of the ID used in the reaction section tubes) provides a substantial pressure drop reduction versus the solution typically used. Pressure drop depends on the viscosity of the ethylene/polymer mixture, velocity inside the tube and length of the tube. As a reference, the typical cooling zone configuration described in Comparative Example 1 will provide an estimated pressure drop of 15.6 MPa, while Reference Example 1 will provide an estimated pressure drop of 6.3 MPa and Reference Example 2 of 5.7 MPa. For the case of Comparative Example 2, the typical cooling zone will provide an estimated drop of 19 MPa while Reference Example 3. will be 11.2 MPa. This is a significant difference as the tubular section was composed of multiple reaction zones with multiple cooling zones each as will be described later.

### Comparative Example 3 (autoclave-tubular configuration)

Table 4 (Comparative Example 3) shows the results for an autoclave-tubular reactor configuration producing an ethylene vinyl acetate copolymer, following the process disclosed in WO2021250054 for an autoclave, although results in the same direction can be obtained using different autoclave design configurations. Eighty percent of the compressed ethylene/comonomer mixture was introduced into the first reaction zone of the autoclave reactor at 18 °C, after cooling from 64 °C at the Reactor Feed Coolers (RFCs). The remaining twenty percent of the flow was introduced via side-stream at the tubular section. The discharge pressure at the secondary compressor was controlled at 240 MPa, which determined the pressure at the reaction system. The autoclave reactor consisted of four reaction zones with controlling temperatures 150, 155, 190, and 225 °C, respectively, using a peroxide mixture of di(sec-butyl) peroxide dicarbonate, tert-butyl peroxypivalate, 1,1,3,3-tetramethylbutyl peroxy-2-ethylhexanoate, tert-butyl peroxy-3,5,5-trimethylhexanoate, and di-tert butyl peroxide. A 1,940 m tubular section following the autoclave consisted of a precooling section, a reaction zone 1 and a reaction zone 2, with tube velocities between 15 and 17 m/s and residence times per section between 35 seconds and 48 seconds. The side-stream was introduced before reaction zone 1. The peroxide cocktails were used to reinitiate the reaction at reaction zones 1 and 2. The controlled temperatures at tubular reaction zones were 235 °C and 230 °C, respectively. A two-MFI, ethylene vinyl acetate copolymer with 18 wt.% VA content was produced according to parameters indicated in Table 4. Propylene was used as modifier to control MFI. Under these conditions, the production was 26.4 Tons/h, the Mw/Mn is 6.7 for a 2 g/10 min MFI resin. Total pressure drop from secondary compressor discharge to let down valve was calculated as 128 MPa.

The energy consumed by the secondary compressor was the major contributor to the electricity consumption per ton of polymer produced. Under these conditions, is estimated as 0.911 MWh/Ton of PE produced.

**Table 4: Autoclave-Tubular configuration baseline**

| Comparative Example 3 | | |
|---|---|---|
| Melt Flow Index | g/10 min | 2.0 |
| % Vinyl Acetate | wt. % | 18 |
| Mw / Mn | --- | 6.6 |
| | | |
| Sec. Compressor Flow | Tons/h | 94.3 |
| Sec Comp Disch Pressure | MPa | 240 |
| % Flow per side stream | % | 20 % |
| Autoclave inlet temperature | °C | 16 |
| Autoclave control temps | °C | 150/155/190/225 |
| Tube ID - reaction | mm | 60/65/65 |
| Tube ID - cooling | mm | 60/65/65 |
| Outlet temp precooling | °C | 177 |
| Tube Peak Temp 1 | °C | 235 |
| Tube Peak Temp 2 | °C | 230 |
| | | |
| Total heat transfer area | m² | 320 |
| Total Pressure Drop | MPa | 128 |
| | | |
| Production Rate | Tons/h | 26.4 |
| Power Consumption | MWh/Ton | 0.911 |
| | | |
| Ethylene in Reactor Bay | Tons | 2.65 |
| Non-Congestion Index | m/Ton C2 | 46 |
| | | |
| Tons of High-Pressure Steel required at Tubular section | Tons | 238 |

| | | |
|---|---|---|
| 1 Ton = 1,000 kg | | |

### Example 1 and 2 (autoclave-tubular configuration)

These examples are focused on the advantages offered by the design of the supper cooling sections.

Ethylene vinyl acetate copolymer was produced following the process of the present disclosure. Table 5 shows the Reactor Feed Coolers (RFCs) and autoclave-tubular design, the parameters and the results of two alternative designs (Examples 1 and 2). Same Reactor Feed Coolers (RFCs) and autoclave design and conditions as Comparative Example 3. The reaction section of reaction zones 1 and 2 were designed for tube velocities between 15 and 17 m/s and residence time of 12 seconds. Cooling sections were designed for parallel flow with double pipe jacketing, with tube velocities between 15 and 17 m/s. The total number of tubes in Example 1 is such that the same total heat transfer area as Comparative Example 3 (320 m²) was used, while in Example 2 a 30 % increased heat transfer area (420 m²) was used.

Table 5 (Example 1 column) shows the results for Example 1. For 2 g/10 min MFI, Mw/Mn of 6.7 and utilizing 230 °C / 230 °C as peak temperatures at tubular reactor zones, a reactor pressure of 220 MPa is required. This pressure is lower than Comparative Example 3 due to the lower total pressure drop associated with the new cooling zones design, which is in this case of just 78 MPa. Under these conditions, the production rate is 26.3 Tons/h, similar than in Comparative Example 3, but the estimated electricity consumption per ton of polymer produced was reduced to 0.875 MWh/Ton.

Table 4 (Example 2 column) shows the results for Example 2. For 2 g/10 min, Mw/Mn of 6.7 and utilizing 235 °C / 235 °C as peak temperatures at the tubular reactor zones, the pressure required is 230 MPa, still lower than that required for the base case. Total pressure drop for the tubular section was estimated to be 104 MPa. Under these conditions, the production rate was 29.0 Tons/h higher than in Comparative example 3 and the estimated electricity consumption per ton of polymer was reduced to 0.850 MWh/Ton.

**Table 5: Autoclave-Tubular configuration of Examples 1 and 2**

| | | Example 1 | Example 2 |
|---|---|---|---|
| Melt Flow Index | g/10 min | 2.0 | 2.0 |
| % Vinyl Acetate | wt. % | 18 | 18 |
| Mw/Mn | --- | 6.7 | 6.6 |
| | | | |
| Sec Compressor Flow | Tons/h | 94.3 | 94.3 |
| Sec Comp Disch Pressure | MPa | 220 | 230 |
| % Flow per side stream | % | 20% | 20% |
| Autoclave inlet temperature | °C | 17 | 17 |
| Autoclave control temps | C | 150/155/190/225 | 150/155/190/225 |
| Tube ID reaction sections | mm | --/65/65 | --/65/65 |
| Tube ID cooling sections | mm | 40/40/40 | 40/40/40 |
| Outlet temp precooling | C | 184 | 166 |
| Tube Peak Temp 1 | C | 230 | 235 |
| Tube Peak Temp 2 | C | 230 | 235 |
| | | | |
| Total heat transfer area | m² | 320 | 420 |
| Total Pressure Drop | MPa | 78 | 104 |
| | | | |
| Production Rate | Tons/h | 26.3 | 29.0 |
| Power Consumption | MWh/Ton | 0.875 | 0.850 |
| | | | |
| Ethylene in Reactor Bay | Tons | 1.85 | 2.34 |
| Non-Congestion Index | m/Ton C2 | 66 | 52 |
| | | | |
| Tons of High-Pressure Steel required at Tubular section | Tons | 182 | 222 |

### Comparative Example 4 and Example 3 (tubular configuration)

The benefits of this engineering solution are more impactful when designing high-capacity units. Comparative Example 4 and Example 3 compare two tubular reactor designs for a 500-600 KTA LDPE plant.

A homopolymer LDPE of 2 g/10 min Melt Flow Index general purpose film grade product was produced with the conditions shown at Table 6 for Comparative Example 4 and Example 3.

**Table 6: High-Capacity Tubular configuration for LDPE production - Comparative Example 4 and Example 3**

| | | Comparative Example 4 | Example 3 |
|---|---|---|---|
| Melt Flow Index | g/10 min | 2.0 | 2.0 |
| % Vinyl Acetate | wt. % | -- | -- |
| Mw/Mn | --- | 8.7 | 8.6 |
| | | | |
| Sec Compressor Flow | Tons/h | 213.0 | 213.0 |
| Sec Comp Disch Pressure | MPa | 270 | 270 |
| % Flow per side stream | % | 75% | 75% |
| Flow configuration | % | 25/25/50 | 25/25/50 |
| Side-stream temperature | °C | 25 | 25 |
| Tube ID reaction sections | mm | 50/70/95/95 | 50/70/95/95 |
| Tube ID cooling sections | mm | 50/70/95/95 | 50/40/40/40 |
| First Initiation Temp | °C | 146 | 141 |
| Tube Peak Temp 1 | °C | 305 | 305 |
| Tube Peak Temp 2 | °C | 305 | 305 |
| Tube Peak Temp 3 | °C | 305 | 310 |
| Tube Peak Temp 4 | °C | 305 | 310 |
| | | | |
| Total heat transfer area | m² | 575 | 855 |
| Total Pressure Drop | MPa | 131 | 84 |
| | | | |
| Production Rate | Tons/h | 68.5 | 74.9 |
| Annual Capacity @ 8100 hr. | KTA | 555 | 605 |
| Power Consumption | MWh / Ton | 0.892 | 0.850 |
| | | | |
| Ethylene in Reactor Bay | Tons | 6.97 | 5.64 |
| Reactor Bay Dimensions | m | 90 x 35 x 9 | 85 x 30 x 9 |
| Non- Congestion Index | m/Ton C2 | 50 | 50 |
| | | | |
| Tons of High-Pressure Steel required at Tubular section | Tons | 413 | 365 |

In Comparative Example 4, a 2,600 meters tubular reactor with two cooled ethylene side-streams of 25 % and 50 % of the total flow respectively was used. Tube IDs were such that the velocity is maintained at 15-18 m/s. For each reaction zone, both reaction section and cooling section had the same ID. The total heat transfer area with hot water system was 575 m². With these conditions, the estimated annual capacity at 8,100 hours/year was 555 KTA and the estimated electricity intensity was 0.892 MWh/Ton. A reactor bay of 2,550 m² and 9.0 m high was required for a non-congestion index of 50. Other reaction conditions are described in Table 3 above.

In Example 3 the gas velocity inside the reactor was maintained within 15-18 m/s. The reaction section of each reactor zone was such residence time is 10-12 seconds. The cooling sections were designed such that tube IDs were approximately 40 to 60 % of the reaction section. The peroxide cocktails used were optimized for the temperature range to be covered in each reaction zone and the allocated residence time. The increased heat transfer density allowed to increase the heat transfer area up to 855 m². With these conditions, the estimated annual capacity at 8,100 hours/year was 605 KTA and the estimated electricity intensity was 0.850 MWh/ton.

The invention comprises the following clauses:
Clause 1. A plant for producing an ethylene polymer, the plant comprising:
   - a secondary compressor (5) with an outlet;
   - a temperature adjusting system (18) with an inlet and an outlet, the temperature adjusting system being in fluid communication with the secondary compressor outlet;
   - a reaction system (6) with an inlet in fluid communication with the outlet of the temperature adjusting system, the reaction system comprising a tubular reactor, wherein the tubular reactor has two or more reaction zones (19), wherein each reaction zone comprises i) a reaction section (20) having an inside diameter and ii) a super cooler (21) downstream and in direct fluid communication with the reaction section; and
   - a controller configured to allow that a fluid has a residence time in the reaction section of no more than 60 seconds;
   wherein the super cooler comprises two or more parallel flow tubes having an inside diameter smaller than the inside diameter of the reaction section.
Clause 2. **The** plant of clause 1, wherein the super cooler is configured to be operated with a pressure drop between the super cooler inlet and the super cooler outlet below 20 MPa.
Clause 3. **The** plant of clause 2, wherein the pressure drop between the super cooler inlet and the super cooler outlet is below 15 MPa.
Clause 4. **The** plant of clause 3, wherein the pressure drop between the super cooler inlet and the super cooler outlet is from 0.2 MPa to 5 MPa.
Clause 5. **The** plant of any one of clauses 1 to 4, wherein the inside diameter of the parallel flow tubes is from 10 % to 90 % of the inside diameter of the reaction section.
Clause 6. **The** plant of clause 5, wherein the inside diameter of the parallel flow tubes is from 20 % to 80 % of the inside diameter of the reaction section.
Clause 7. **The** plant of clause 6, wherein the inside diameter of the parallel flow tubes is from 25 % to 75 % of the inside diameter of the reaction section.
Clause 8. **The** plant any one of clauses 1 to 7, wherein the residence time is of less than 15 seconds.
Clause 9. **The** plant of clause 8, wherein the residence time is from 5 to 12 seconds.
Clause 10. **The** plant of any one of clauses 1 to 9, wherein the controller is configured to allow a speed of fluid flowing in the two or more parallel flow tubes from 4 m/s to 30 m/s.
Clause 11. **The** plant of clause 10, wherein the controller is configured to allow a speed of fluid flowing in the two or more parallel flow tubes from 10 m/s to 20 m/s.
Clause 12. **The** plant of clause 11, wherein the controller is configured to allow a speed of fluid flowing in the two or more parallel flow tubes from 15 m/s to 18 m/s.
Clause 13. **The** plant of any one of clauses 1 to 12, wherein the temperature adjusting system is configured to heat a fluid.
Clause 14. **The** plant of clause 13, further comprising a reactor feed super cooler (16) with an inlet in fluid communication with the outlet of the secondary compressor and an outlet in fluid communication with an inlet in a side-stream feed of the tubular reactor, the reactor feed super cooler comprising two or more parallel flow tubes having an inside diameter smaller than the inside diameter of the reaction section.
Clause 15. **The** plant of any one of clauses 1 to 14, wherein the reaction system comprises the temperature adjusting system, wherein the temperature adjusting system is configured to cool a fluid, and wherein the reaction system further comprises an autoclave (17) in fluid communication with the outlet of the temperature adjusting system (18).
Clause 16. **The** plant of clause 15, further comprising a reactor feed super cooler (16) with an outlet in fluid communication with an inlet of the autoclave, the reactor feed super cooler comprising two or more parallel flow tubes having an inside diameter smaller than the inside diameter of the reaction section.
Clause 17. A process for producing an ethylene polymer by polymerizing ethylene or, alternatively, ethylene and a comonomer in a plant as defined in any one of clauses 1 to 16.
Clause 18. **The** process of clause 17, wherein the process comprises:
   a) compressing ethylene monomer at a pressure equal to or greater than 120 MPa through the secondary compressor, particularly at a pressure from 120 MPa to 360 MPa or higher, to obtain a compressed ethylene;
   b) optionally, adding to the compressed ethylene a comonomer or, alternatively a comonomer and a modifier to obtain a compressed reaction mixture;
   c) introducing the compressed ethylene or the compressed reaction mixture into the reaction system;
   d) adding at least one free radical initiator to each reaction zone in order to start a polymerization reaction and to obtain as ethylene polymer or an ethylene copolymer; and
   e) separating the obtained ethylene polymer or ethylene copolymer;
   wherein in the reaction section of each reaction zone the reaction mixture has a residence time of no more than 60 seconds.
Clause 19. **The** process of clause 18, wherein the residence time is of less than 15 seconds.
Clause 20. **The** process of clause 18, wherein the residence time is from 5 to 12 seconds.
Clause 21. **The** process of any one of clauses 18 to 20, wherein the free radical initiator comprises or consists of at least two organic peroxides.
Clause 22. **The** process of any one of clauses 18 to 21, wherein the speed of fluid to be cooled flowing in the two or more parallel flow tubes is from 4 m/s to 30 m/s.
Clause 23. **The** plant of clause 22, wherein the speed of fluid flowing in the two or more parallel flow tubes is from 10 m/s to 20 m/s.
Clause 24. **The** plant of clause 22, wherein the speed of fluid flowing in the two or more parallel flow tubes is from 15 m/s to 18 m/s.
Clause 25. **The** process of any one of clauses 21 to 24, wherein each reaction zone operates at a predetermined temperature range and the at least two organic peroxides cover the temperature range of each reaction zone.
Clause 26. **The** process of clause 25, wherein the temperature range of each reaction zone is from 110 °C to 330 °C.
Clause 27. **The** process of any one of clauses 18 to 26, wherein after step a) or, optionally, step b) the compressed ethylene of the compressed reaction mixture has a temperature, and the temperature is adjusted before introducing the compressed ethylene or the compressed reaction mixture into the reaction system.
Clause 28. **The** process of any one of clauses 18 to 27, wherein the reaction system consists of a tubular reactor and the temperature adjusting system is configured to heat the compressed ethylene or the compressed reaction mixture.
Clause 29. **The** process of clause 28, wherein the compressed ethylene or the compressed reaction mixture is introduced into the tubular reactor at a temperature from 50 °C to 200 °C.
Clause 30. **The** process of any one of clauses 18 to 27, wherein the reaction system further comprises an autoclave in fluid communication between the with the outlet of the temperature adjusting system 18 and an inlet of the tubular reactor, and the temperature adjusting system is configured to cool the compressed ethylene or the compressed reaction mixture.
Clause 31. The process of clause 30, wherein the compressed ethylene or the compressed reaction mixture is introduced into the tubular reactor at a temperature from -20 °C to 100 °C.
Clause 32. The process of any one of clauses 30 to 31, wherein the compressed ethylene or the compressed reaction mixture is introduced into the autoclave reactor at a temperature from -20 °C to 70 °C.
Clause 33. The process of clauses 18 to 32, wherein the compressed ethylene monomer is from 55 wt.% to 100 wt.% of total reaction mixture.
Clause 34. The process according to any one of clauses 18 to 33, further comprising processing the ethylene copolymer into an article of manufacture.

### Citation List

1. WO2021250054
2. WO2024089081

## Claims

1. A plant (1) for producing an ethylene polymer, the plant comprising:
- a secondary compressor (5) with an outlet;
- a temperature adjusting system (18) with an inlet and an outlet, the temperature adjusting system being in fluid communication with the secondary compressor outlet;
- a reaction system (6) with an inlet in fluid communication with the outlet of the temperature adjusting system, the reaction system comprising a tubular reactor (100), wherein the tubular reactor has two or more reaction zones (19), wherein each reaction zone comprises i) a reaction section (20) having an inside diameter and ii) a super cooler (21) downstream and in direct fluid communication with the reaction section; and
- a controller configured to allow that a fluid has a residence time in the reaction section of no more than 60 seconds;
wherein the super cooler comprises two or more parallel flow tubes having an inside diameter smaller than the inside diameter of the reaction section.

2. **The** plant of claim 1, wherein the super cooler is configured to be operated with a pressure drop between the super cooler inlet and the super cooler outlet below about 20 MPa.

3. **The** plant of claims 1 or 2, wherein the inside diameter of the parallel flow tubes is from 10 % to 90 % of the inside diameter of the reaction section.

4. **The** plant of any one of claims 1 to 3, wherein the controller is configured to allow a speed of fluid flowing in the two or more parallel flow tubes from 4 m/s to 30 m/s.

5. **The** plant of any one of claims 1 to 4, wherein the temperature adjusting system is configured to heat a fluid.

6. **The** plant of claim 5, further comprising a reactor feed super cooler (16) with an inlet in fluid communication with the outlet of the secondary compressor and an outlet in fluid communication with an inlet in a side-stream feed of the tubular reactor, the reactor feed super cooler comprising two or more parallel flow tubes having an inside diameter smaller than the inside diameter of the reaction section.

7. **The** plant of any one of claims 1 to 3, wherein the reaction system comprises the temperature adjusting system, wherein the temperature adjusting system is configured to cool a fluid, and wherein the reaction system further comprises an autoclave (17) in fluid communication with the inlet of the temperature adjusting system (18).

8. **The** plant of claim 7, further comprising a reactor feed super cooler (16) with an outlet in fluid communication with an inlet of the autoclave, the reactor feed super cooler comprising two or more parallel flow tubes having an inside diameter smaller than the inside diameter of the reaction section.

9. A process for producing an ethylene polymer by polymerizing ethylene or, alternatively, ethylene and a comonomer in a plant as defined in any one of claims 1 to 8.

10. **The** process of claim 9, wherein the process comprises:
a) compressing ethylene monomer at a pressure equal to or greater than 120 MPa through the secondary compressor, particularly at a pressure from 120 MPa to 360 MPa or higher, to obtain a compressed ethylene;
b) optionally, adding to the compressed ethylene a comonomer or, alternatively a comonomer and a modifier to obtain a compressed reaction mixture;
c) introducing the compressed ethylene or the compressed reaction mixture into the reaction system;
d) adding at least one free radical initiator to each reaction zone in order to start a polymerization reaction and to obtain as ethylene polymer or an ethylene copolymer; and
e) separating the obtained ethylene polymer or ethylene copolymer;
wherein in the reaction section of each reaction zone the reaction mixture has a residence time of no more than 60 seconds.

11. **The** process of any one of claims 9 to 10, wherein the free radical initiator comprises or consists of at least two organic peroxides

12. **The** process of any one of claims 9 to 11, wherein the speed of fluid to be cooled flowing in the two or more parallel flow tubes is from 4 m/s to 30 m/s.

13. **The** process of claims 10 to 12, wherein each reaction zone operates at a predetermined temperature range and the at least two organic peroxides cover the temperature range of each reaction zone.

14. **The** process of claims 10 to 13, wherein the compressed ethylene monomer is from 55 wt.% to 100 wt.% of total reaction mixture.

15. **The** process according to any one of claims 10 to 14, further comprising processing the ethylene copolymer into an article of manufacture.
